# EUROPÄISCHE PATENTSCHRIFT

(11) **EP 2 893 201 B1**
(45) Veröffentlichungstag und Bekanntmachung des Hinweises auf die Patenterteilung: **22.03.2017**
(21) Anmeldenummer: 13759997.3
(22) Anmeldetag: 04.09.2013
(51) Int. Cl.: F16B 11/00

(54) **VERFAHREN ZUM HERSTELLEN EINER BÖRDELNAHT**
METHOD FOR PRODUCING A RAISED SEAM
PROCÉDÉ DE FABRICATION D'UN JOINT A BORDS RELEVES

(30) Priorität: 05.09.2012 DE 102012215715; 01.10.2012 DE 102012217959
(43) Veröffentlichungstag der Anmeldung: 15.07.2015
(73) Patentinhaber: Ford Global Technologies, LLC, Dearborn, MI 48126 (US)
(72) Erfinder: FRIETSCH, Jörg, 53773 Hennef (DE); SAßMANNSHAUSEN, Jörg, 51375 Leverkusen (DE)
(74) Vertreter: Dörfler, Thomas
(86) Internationale Anmeldenummer: PCT/EP2013/068283
(87) Internationale Veröffentlichungsnummer: WO 2014/037400

(56) Entgegenhaltungen:
- GB-A- 2 455 292
- US-A- 5 587 042

## Beschreibung

Die vorliegende Erfindung betrifft ein Verfahren zum Herstellen einer Bördelnaht zwischen einem inneren Bauteil, das einen freien Kantenabschnitt hat und einem äußeren Bauteil, das eine an einem Kantenabschnitt angeordnete Falzflansch aufweist.

Die GB 2 455 292 A befasst sich mit der Erstellung einer Bördelnaht, wobei zunächst eine C-oder U-förmige Aufnahme gebildet wird, in welche ein zweites Bauteil mit seiner freien kante eingeführt wird. Anschließend wird ein Dichtmaterial in den verbleibenden Raum der C- oder U-förmigen Aufnahme eingebracht, um die beiden Bauteile miteinander zu verkleben. Das Dichtmaterial ist ein wärmeaktivierbarer Klebstoff. Die GB 2 455 292 A offenbart, dass noch ein Überzug auf das Dichtmaterial aufgebracht wird. Der Überzug wird jedoch erst aufgebracht, nachdem das Dichtmaterial expandiert ist.

Die US 5,587,042 A befasst sich ebenfalls mit dem Erstellen einer Bördelnaht unter Verwendung von Klebstoff. Mit der US 5,587,042 A soll eine kombinierte Vorrichtung geschaffen werden, bei welcher ein Falzen und ein Erwärmen/Aushärten im Wesentlichen gleichzeitig durchgeführt werden kann. Die US 5,587,042 A lehrt dem Fachmann, dass vor dem Einbringen der Bleche in die Falzmaschine ein Tropfen eines wärmeaktivierbaren Klebstoffs mit einem Durchmesser von einem achtem Zoll auf die innere Oberfläche des äußeren Bleches aufgebracht wird. Gleichzeitig zum Falzen wird sodann der Klebstofftropfen erhitzt. Insofern wird also der heiße Klebstoff aus dem Falzspalt heraustreten, so dass dessen Tropfen abtropfen können und zur Verschmutzung der Montagestraße sowie der Werkzeuge führen können.

Die DE 10 2008 060 930 A1 befasst sich mit einer kombinierten Falz- und Klebverbindung an einem Karosserieteil eines Kraftfahrzeuges, wobei ein Außenteil des Karosserieteils in einem Randbereich um einen Randbereich eines Innenteils des Karosserieteils gefalzt ist, wobei ein Klebstoff den Randbereich des Innenteils beidseits umgibt. Die Herstellung der Falz- und Klebverbindung soll sich vereinfachen lassen, wenn der Klebstoff durch einen zumindest während der Herstellung der Falz-und Klebverbindung knetbaren Streifenkleber gebildet ist.

Bördelnähte, die auch als Falznähte bezeichnet werden können, werden zum Verbinden eines inneren Bleches mit einem äußeren Blech angewendet. Dabei sind die beiden Bauteile dazu ausgeführt, miteinander durch Umbiegen der Falzflansch an dem äußeren Blech um den freien Kantenabschnitt des inneren Bauteils verbunden zu werden. Schwierig ist jedoch die Bördelnaht gegen Korrosionseinwirkung zu schützen, da sich in der Falznaht, also in dem Falzspalt dauerhaft verbleibende Feuchtigkeit sammeln kann, welche den Korrosionsprozess beschleunigend beeinflusst. Auch ist bekannt, dass die Bördelnaht bei einem lediglich kraftschlüssigen Metall an Metall Kontakt nicht die erforderlichen Festigkeitseigenschaften aufweist, wie diese zum Beispiel im Fahrzeugbau gefordert werden. Bördelnähte werden beispielsweise an Hauben, Türen oder ähnlichem eingesetzt. Bekannt ist, den Falzspalt daher mit geeigneten Mitteln zu versehen, um die Korrosionsbildung zu vermeiden, und um die Verbindung insgesamt widerstandfähiger ausführen zu können.

Hierzu werden z.B. Klebstoffe verwendet, wie beispielsweise die WO94/21740 offenbart. Dabei geht die WO94/21740 von einem Verfahren zum Erreichen einer Klebeverbindung in einer Falznaht zwischen einem inneren Teil und einem äußeren Teil mit einem Kaltepoxidkleber aus, der auf die Oberfläche des Kantenbereiches des äußeren Teils aufgebracht wird, welche mit dem Kantenbereich des inneren Teils in Kontakt ist. Die beiden Teile werden aufeinander gebracht, wobei der Falzflansch umgebogen wird. Nach dem Vollenden der Falznaht, wird der Klebestreifen aufgebracht, und um die Verbindung herum gepresst, wobei allerdings nicht die komplette Bördelnaht mit dem Kleber bedeckt wird. So kann sich eine Luftblase in der Bördelnaht fangen, was mit der Lehre der WO94/21740 verhindert werden soll, indem ein Klebestreifen in einer heißen Phase vor dem Zusammenführen der beiden Bauteile und auch vor dem Falzen aufgebracht wird. Damit können wohl Luftblasen vermieden werden. Jedoch wird der heiße und flüssige Klebstoff bei dem Bördelvorgang aus der Falznaht herausgedrückt, so dass der Klebstoff Tropfen bilden kann, die, wenn diese abtropfen zu Verschmutzungen der Montagestrasse sowie der Werkzeuge nachfolgender Montagestationen führen können.

Um eine solche Verschmutzung zu vermeiden, sollte vorgesehen sein, dass der Klebstoff vor einer Weiterverarbeitung des Bauteils aushärtet. Dies wirkt sich jedoch nachteilig auf den Herstellungstakt auf, und ist zudem aufwendig und aus betriebswirtschaftlicher Sicht unrentabel.

Die EP 0 892 180 A1 schlägt vor, das innere Bauteil um seinen freien Kantenabschnitt herum mit einem vorgeformten Klebekörper zu umgeben. Der Klebekörper ist U-förmig so ausgeführt, dass dieser auf den freien Kantenabschnitt gesteckt mit Klemmkraft gehalten ist. Gegebenenfalls kann noch ein zweiseitig klebender Klebestreifen an dem längeren der beiden U-Schenkel angebracht werden, so dass zusätzlich zur Klemmkraft eine Klebkraft wirken kann. Ist der Klebekörper angebracht, werden die Bauteile zusammengebracht, wobei die Bördelnaht durch Umbiegen der Falzflansch vollendet wird. Sodann wird der Klebekörper aufgeweicht, so dass die Bauteile an der Klebestelle benetzt werden. Anschließend wird die Klebestelle ausgehärtet.

Die DE 36 21 758 offenbart ein Verfahren zum Abdichten einer Falzverbindung mittels eines durch Wärmezufuhr gelier- und/oder härtbaren Bördelnahtklebers im Falzspalt und einer diesem vorgeschalteten Versiegelungsschicht, die aus durch Wärmezufuhr gelier- und/oder härtbarem Material besteht, und auf die Schnittkante der Falzverbindung aufgetragen wird, wobei die Falzverbindung mindestens einer Wärmebehandlung unterworfen wird. Zumindest die Bördelnaht wird auf Geliertemperatur erwärmt, wobei die Versiegelungsschicht auf die erwärmte Schnittkante aufgetragen wird.

Die Herstellung einer Bördelnaht mit einem pastösen Klebstoff ist demnach ein kritischer Prozess hinsichtlich des Korrosionsschutzes, aber auch hinsichtlich des ordnungsgemäßen Ausfüllens der Bördelnaht mittels des Klebstoffs. Zudem ist vorgesehen, dass der Klebstoff einer Voraushärtung unterzogen wird, wobei auch einzelne Schweißpunkte vorgesehen werden, um eine Relativbewegung beider zu verbindender Bauteile zueinander zu verhindern. Bisher kann eine Füllrate von 100/100/>0 nur durch ein Herausquetschen des Klebstoffes aus der Bördelnaht erreicht werden, was einen erheblichen Reinigungsaufwand nach sich zieht, wie oben bereits zur WO94/21740 angedeutet. Mit einer SPC (Statistical Process Control) ähnlichen Überprüfung kann die Verbindung überprüft werden, wobei allerdings noch keine zerstörungsfreien Überprüfungsmethoden zum Verifizieren, ob die Bördelnaht korrekt ausgefüllt ist, hinreichend anwendbar sind.

Vor diesem Hintergrund liegt der vorliegenden Erfindung die Aufgabe zugrunde, ein Verfahren zum Herstellen einer Bördelnaht anzugeben, mit welchem sichergestellt werden kann, dass die Bördelnaht gegen Korrosion geschützt ist, wobei ungewollte Lufteinschlüsse ausgeschlossen werden können und wobei auf den Einsatz einer zusätzlichen Kantenversiegelung verzichtet werden kann.

Diese Aufgabe wird durch ein Verfahren mit den Merkmalen des Anspruchs 1 gelöst. Weitere, besonders vorteilhafte Ausgestaltungen der Erfindung offenbaren die Unteransprüche.

Es ist darauf hinzuweisen, dass die in der nachfolgenden Beschreibung einzeln aufgeführten Merkmale in beliebiger, technisch sinnvoller Weise miteinander kombiniert werden können und weitere Ausgestaltungen der Erfindung aufzeigen. Die Beschreibung charakterisiert und spezifiziert die Erfindung insbesondere im Zusammenhang mit den Figuren zusätzlich.

Erfindungsgemäß umfasst ein Verfahren zum Herstellen einer Bördelnaht zwischen einem inneren Bauteil, das einen freien Kantenabschnitt hat und einem äußeren Bauteil, das eine an einem Kantenabschnitt angeordnete Falzflansch aufweist zumindest die folgenden Schritte
Aufbringen eines unter Wärme expandierenden Strukturklebers in Form eines Klebstoffstreifens auf eines der Bauteile an seiner zu dem anderen Bauteil orientierten Seite, sodann
Umfalzen des Falzflanschs in Richtung zum inneren Bauteil, wodurch ein Falzspalt entsteht, erst dann
Auftragen einer Lackschicht zumindest im Bereich der Bördelnaht, auf eines oder beide der Bauteile, und erst dann
Erwärmen zumindest des Bereiches der Bördelnaht, so dass der Strukturkleber des Klebstoffstreifens schmilzt und expandiert, sich dabei ausdehnt und dadurch die Lackschicht im Bereich der Bördelnaht zumindest teilweise überdeckt.

Mit der Erfindung wird eine gegen Korrosion geschützte Bördelnaht erreicht, welche noch dazu ohne zusätzlichen Einsatz eines speziellen Siegelstoffes an seinen relevanten Stellen versiegelt ist, indem durch die Expansion und Ausdehnung des Strukturklebers eine Dichtwulst ausgebildet ist, welche die Lackschicht überdeckt.

In günstiger Ausgestaltung weist der Klebstoffstreifen zumindest abschnittsweise eine an einen späteren Falzspalt angepasste Erstreckung auf, die zumindest an einem Ende des Falzspaltes kürzer ist als die Erstreckung des Falzspaltes.

Möglich ist, dass der Klebstoffstreifen ein vorgefertigtes Klebstoffelement ist. In vorteilhafter Ausführung wird der Strukturklebstoffstreifen auf eines der Bauteile aufgeklebt, wobei ein Befestigungsabschnitt und ein Überstand gebildet ist. Der Überstand wird dabei in bevorzugter Ausgestaltung so bemessen, dass dieser nach dem Umbiegen um die freie Kante des inneren Bauteils herum kürzer ist, als der Falzflansch im umgebogenen Zustand. Insofern weist der Strukturklebstoffstreifen eine Erstreckung, also Breite auf, welcher kürzer ist, als die Erstreckung des Falzspaltes.

Zweckmäßig ist, wenn der Klebstoffstreifen aus einem pastösen Strukturkleber besteht, und auf zumindest ein Bauteil aufgespritzt wird.

Wie bereits oben erwähnt, ist es günstig im Sinne der Erfindung wenn sich bei der Expansion und Ausdehnung des Strukturklebers die Dichtwulst bildet, welche sich so quasi auf die Lackschicht legt, und so auch die freien Schnittkanten schützt, wobei sich die Dichtwulst insbesondere einen Übergang eines freien Kantenabschnittes des inneren Bauteils überbrückend in einen Zwischenraum zwischen dem inneren Bauteil und dem äußeren Bauteil einlegt.

Um ein möglichst einfaches Aufbringen und eine gleichmäßige Anlage des Strukturklebers erreichen zu können, kann vorteilhaft vorgesehen werden, dass der Klebstoffstreifen bei dem Aufbringen auf ein Bauteil leicht erwärmt wird, ohne zu expandieren, wobei der Strukturkleber also bevorzugt mit einer solchen geringen Temperatur Expansions- und Ausdehnungsfrei erwärmt wird. Zweckmäßig ist dabei, wenn der Klebstoffstreifen nach dem Aufbringen abkühlt, bevor der Falzflansch umgefalzt wird. So kann, trotz des Aufbringens im erwärmten Zustand, vorteilhaft ein Ausquetschen des Strukturklebers aus dem Falzspalt vermieden werden. Günstig kann auch sein, dass der Klebstoffstreifen nach dem Aufbringen auf dem betreffenden Bauteil zumindest teilweise verhärtet, bevor der Falzflansch umgefalzt wird. Mit diesen Maßnahmen kann der Effekt des Ausquetschens, welcher mit der Erfindung ohnehin vermieden ist, weiter ausgeschlossen werden.

In weiter günstiger Ausgestaltung kann der Klebstoffstreifen feinverteilte Abstandhalter, insbesondere in der Ausgestaltung als Glaskügelchen aufweisen. Die Abstandhalter können einen definierten Abstand der beiden Karosserieteile definieren, so dass beide Bauteile, insbesondere nach dem Umfalzen einen homogenen Abstand zumindest im Bereich des Falzspaltes aufweisen. Ein homogener Abstand zwischen beiden Bauteilen kann dahingehend als vorteilhaft angesehen werden, dass der Falzspalt ebenso homogen ausgefüllt wird. Insofern kann zweckmäßiger Weise vorgesehen werden, dass die Abstandhalter Dimensionen, also Abmessungen im Bereich der Falzspaltweite aufweisen. Die Abstandhalter können unterschiedliche geometrische Ausgestaltungen aufweisen, wobei die Abstandhalter in einem Klebstoffstreifen bevorzugt die gleiche geometrische Ausgestaltung aufweisen sollte. Solche Abstandhalter können beispielhaft als Tetraeder, als Kugel, als Würfel, oder als Oktaeder ausgeführt sein, um nur einige nicht beschränkende Ausgestaltungen zu nennen. Die Dimensionen der Abstandhalter sind natürlich variabel, aber vorzugsweise unmittelbar abhängig von der herzustellen Bördelnaht. Insbesondere können die Abstandhalter ein Minimalvolumen gewährleisten, um eine kontrollierte Expansion des Klebstoffstreifens erreichen zu können. Auch der Werkstoff der Abstandhalter ist natürlich nicht auf den Werkstoff Glas beschränkt. Beispielhaft können die Abstandhalter auch aus einer Keramik oder aus mineralischen Rohstoffen bestehen. Die geometrischen Abstandhalter dienen so auch zur Gewährleistung von gleichmäßigen Flanschgeometrien nach dem Bördelvorgang.

In bevorzugter Ausführung ist die Lackschicht eine Korrosionsschutzgrundierung.

In möglicher Ausgestaltung wird der Strukturklebstoffstreifen auf das innere Bauteil so aufgebracht, dass der Befestigungsabschnitt an dem inneren Bauteil haftet. Der Überstand steht über die freie Kante des inneren Bauteils über. Die Klebeseite des Überstands ist in bevorzugter Ausführung von dem Schutzelement befreit.

Ist der Strukturklebstoffstreifen auf das innere Bauteil aufgebracht, also mit seinem Befestigungsabschnitt an dem inneren Bauteil angeklebt, werden das innere Bauteil und das äußere Bauteil zusammengeführt, bzw. zusammengefügt. Bei diesem Fügeprozess wird der Überstand bereits entsprechend mitgenommen, bzw. umgeformt, so dass der Überstand beispielsweise parallel zum Verlauf des Falzflansch angeordnet ist. Da die Klebeseite keinen Kontakt zum Falzflansch hat, gleitet der Strukturklebstoffstreifen entsprechend an dem Falzflansch ab und wird mitgenommen ohne zu haften. Der Strukturklebstoffstreifen liegt in diesem Zustand mit seiner zur Klebeseite gegenüberliegenden Strukturseite an dem äußeren Bauteil, also an dem Falzflansch an. Anschließend wird die Falzflansch in Richtung zum inneren Bauteil umgefalzt, so dass die Bördelnaht, also die Falznaht gebildet ist. Bei dem Falzen des Falzflansch wird der Überstand des Strukturklebstoffstreifens entsprechend, also zwangsweise mitgenommen, wobei die Klebeseite an der freien Kante, aber auch an dem inneren Bauteil anliegt. Das innere Bauteil ist an seinem freien Kantenabschnitt also quasi von dem Strukturklebstoffstreifen bereichsweise umfasst.

Wird der Strukturklebstoffstreifen dagegen auf eines der Bauteile aufgespritzt, wird natürlich kein Überstand oder Befestigungsabschnitt wie bei einem vorgefertigten, einseitig klebenden Klebstoffelement gebildet, wobei die effektive Länge des Strukturklebstoffstreifens so aufgebracht wird, dass die entsprechenden Ausdehnungsräume nach dem mechanischen Bördelschritt vorhanden sind.

Bevor die Bördelnaht erwärmt wird, wird die Lackschicht aufgebracht, nachdem der Falzflansch umgebördelt wurde.

Die Bördelnaht wird im kalten Zustand hergestellt, wobei der Strukturklebstoffstreifen im kalten Zustand kürzer ist als der Falzspalt. Dabei ist der Strukturklebstoffstreifen mit seiner inneren freien Kante innerhalb des Falzspaltes angeordnet und zu dem Übergang des freien Kantenabschnittes zum inneren Bauteil beabstandet. Die zur inneren freien Kante gegenüberliegende äußere freie Kante des Strukturklebstoffstreifens ist ebenfalls innerhalb des Falzspaltes, jedoch zur freien Kante des Falzflansch beabstandet. So ist jeweils der Ausdehnungsraum für den Strukturklebstoffstreifen gegeben, wenn dieser aufgrund der Wärmeeinwirkung in dem Bördelnahtbereich erwärmt wird. Günstig ist dabei, dass der Strukturklebstoff bei Austritt aus dem Falzspalt die Dichtwulst bildet, und somit ein Abtropfen flüssigen oder pastösen Klebstoffes vermieden ist. Die Dichtwulst legt sich dabei zum einen um die gesamte freie Kante des Falzflanschs, und zum anderen den Übergang des freien Kantenabschnittes des inneren Bauteils überbrückend in dem Zwischenraum zwischen dem äußeren Bauteil und dem inneren Bauteil an. Vorteilhaft ist, dass der Strukturklebstoffstreifen dabei eine Mehrfachfunktion übernimmt. Zum einem wird eine Verbindung zwischen dem inneren und dem äußeren Bauteil, welche den entsprechenden Anforderungen hinsichtlich Korrosionsschutz und Festigkeit und dergleichen mechanischen Anforderungen standhält zur Verfügung gestellt, wobei zum anderen auf ein besonderes und zusätzliches Ummantelungs- bzw. Versiegelungsmaterial verzichtet werden kann, da die Dichtwulst gebildet ist. Bei dem Erwärmen expandiert der Strukturklebstoffstreifen aber nicht nur aus dem Falzspalt austretend, sondern auch so, dass der gesamte Falzspalt unter Vermeidung eines Einschlusses eines Mediums ausgefüllt ist, wobei beide Bauteile über die Adhäsion des Strukturklebstoffstreifens mit einander verbunden sind. Vorteilhaft wird dabei die jeweilige Lackschicht von der Dichtwulst mit umschlossen, so dass die Bördelnaht gegenüber eindringende Feuchtigkeit und Fremdstoffe geschützt ist.

In weiter günstiger Ausgestaltung des Verfahrens kann vorgesehen sein, den Überstand des Strukturklebstoffstreifens vor dem Zusammenfügen der beiden Bauteile in einem ersten Zwischenschritt lediglich in Richtung zur freien Kante des freien Kantenabschnittes des inneren Bauteils zu formen, so dass die Klebeseite an der freien Kante haftet. Anschließend können die beiden Bauteile zusammengefügt werden, und die vorbeschriebenen Schritte werden durchgeführt.

Möglich ist aber auch, in einem zweiten Zwischenschritt den Überstand vollständig vor dem Zusammenfügen der beiden Bauteile um die freie Kante herum zu formen, so dass der Strukturklebstoffstreifen den freien Kantenabschnitt bereichsweise umfasst, und an diesem anhaftet. Anschließend können die beiden Bauteile zusammengefügt werden, wobei der Falzflansch in Richtung zum inneren Bauteil gefalzt wird. Das Aufbringen der Lackschicht und das Erwärmen schließt sich an.

In bevorzugter Ausgestaltung kann der Strukturklebstoffstreifen mittels eines bevorzugt stationären Applikationskopfes auf das entsprechende Bauteil aufgebracht werden. Anschließend wird der Strukturklebstoffstreifen in der beispielhaften Ausgestaltung als Klebstoffband mittels Heißluftdüsen, Schaumstoffrollen oder Bürsten, um nur einige mögliche Beispiele zu nennen, um die Bauteilkante herumgelegt. Die Heißluft bewirkt eine Erweichung und ausreichende Haftung des Strukturklebstoffstreifens auf der Metalloberfläche, auch wenn diese fettbehaftet, beölt oder anderweitig belegt ist. Nachfolgend wird der Strukturklebstoffstreifen zunächst abgekühlt, wie bereits erwähnt wurde.

Der bevorzugt stationäre Auftrags- bzw. Applikationskopf für den Strukturklebstoffstreifen erlaubt den Auftrag von Materialien mit variabler Breite und Dicke. Der Applikationskopf kann auch eine Schneidevorrichtung zum exakten Ablängen des zu verwendenden Strukturklebstoffstreifens aufweisen. Der Applikationskopf kann aber auch die Spritzvorrichtung aufweisen, wenn der Strukturklebstoffstreifen aufgespritzt wird, wobei eine Schneidvorrichtung und/oder Legevorrichtungen entfallen können.

Das erfindungsgemäße Verfahren kann für jedwede Form von gebördelten Flanschverbindungen angewendet werden und ist für verzinkten Stahl, unverzinkten Stahl, Aluminium und auch Magnesiumbauteile anwendbar, ohne, dass die genannten Materialien beschränkend sein sollen.

Die vollständige Aushärtung des Strukturklebstoffstreifens kann beispielsweise in einem Elektrotauchlackofen erfolgen, wobei eine Aushärtung aber auch mittels beliebiger Aufheizmethodiken erfolgen kann.

In möglicher Ausführung kann der Strukturklebstoffstreifen mit seinem Befestigungsabschnitt an der zum äußeren Bauteil orientierten Seite des freien Kantenabschnittes des inneren Bauteils befestigt werden, wobei sodann der Überstand verformt, also um die freie Kante herum gebogen wird, was spätestens nach dem Zusammenfügen der beiden Bauteile zusammen mit dem Falzen der Falzflansch durchgeführt wird. Möglich ist aber auch, zunächst den Überstand an dem freien Kantenabschnitt des inneren Bauteils an der zum äußeren Bauteil gegenüberliegenden Seite zu befestigen und sodann den Biegevorgang um die freie Kante herum auszuführen.

Denkbar ist aber auch, wenn der Strukturklebstoffstreifen mit seiner Klebseite auf die freie Kante des freien Kantenabschnittes des inneren Bauteils aufgelegt wird, wobei der Strukturklebstoffstreifen mit seinen überstehenden Schenkeln, also mit seinem Überstand und mit dem Befestigungsabschnitt in Richtung zum freien Kantenabschnitt verformt wird, so dass ebenfalls ein den freien Kantenabschnitt bereichsweise umgebendes Strukturelement an dem freien Kantenabschnitt haftet.

In weiter möglicher Ausführung kann vorgesehen sein, der Strukturklebstoffstreifen auf der zum inneren Bauteil orientierten Seite des äußeren Bauteils aufzulegen, wobei der Falzflansch teilweise von dem Überstand belegt ist. Die beiden Bauteile können zusammengeführt, gefalzt und die Bördelnaht nach dem Lackiervorgang mit anschließendem Erwärmen hergestellt werden.

Der Strukturklebstoffstreifen weist, wenn dieser nicht aufgespritzt wird wie bereits erwähnt, lediglich eine klebende Seite auf, welche mit dem Schutzelement versehen ist, die vor dem Anbringen entfernt wird. Das Schutzelement ist in bevorzugter Ausgestaltung als Schutzfolie also als Abziehfolie ausgeführt, welche leicht von der Klebeseite abziehbar ist. Besonders günstig ist, wenn der Strukturklebstoffstreifen als einseitig klebendes Schmelzdichtband ausgeführt ist, welches nach dem Erwärmen expandiert, und so den Falzspalt in allen Richtungen ausfüllend die geforderte Eigenschaft hat.

Der Strukturklebstoffstreifen kann stückweise, also abschnittsweise bzw. als Streifen jeweils anpassbarer Länge auf das jeweilige Bauteil aufgebracht werden, was bedeutet, dass das jeweilige Strukturklebstoffstreifenstück auch nur einen Teilumfang des betreffenden Bauteils abdeckt, wobei mit einer Aneinanderreihung mehrerer einzelner Strukturklebstoffstreifen der Gesamtumfang abdeckbar ist. Insofern kann der Strukturklebstoffstreifen als Rollenware erzeugt werden, wobei die passende, jeweils benötigte Länge abtrennbar ist, was natürlich automatisiert erfolgen kann. In weiter möglicher Ausgestaltung kann ein an den Umfang der Bauteile angepasster Strukturklebstoffstreifen hergestellt werden, welches einstückig an dem betreffenden Bauteil aufbringbar ist. Insofern kann der Strukturklebstoffstreifen als Stückware angepasst an das betreffende Bauteil erzeugt werden. Der Strukturklebstoffstreifen kann eine Dicke von 0.3 bis 1 mm haben, was natürlich nicht beschränkend sein soll. Zielführend ist aber auf jeden Fall, dass die Breite des Strukturklebstoffstreifens bevorzugt so bemessen ist, dass der Falzspalt im kalten Zustand nicht vollständig ausgefüllt ist. Die genannten Dimensionen können natürlich auch für den aufgespritzten Strukturklebstoffstreifen herangezogen werden.

Möglich ist, so zum Beispiel einen Bördelnaht einer Fahrzeugtüre herzustellen, wobei das äußere und das innere Bauteil also Türbleche sein können. Selbstverständlich ist das erfindungsgemäße Verfahren nicht auf die Herstellung von Bördelnähten an Fahrzeugtüren beschränkt, sondern umschließt alle möglichen Bauteile, welche Bördelnähte aufweisen können.

Mit der Erfindung wird ein verbessertes Verfahren zum Herstellen einer Bördelnaht bereitgestellt, mit welchem ein Voraushärten vermeidbar ist, und trotzdem keine Verschmutzungen durch tropfenden Klebstoff zu erwarten sind. Zudem ist der Strukturklebstoffstreifen bezogen auf Klebebänder oder bezogen auf die Dicke von aufgetragenen, pastösen Pasten relativ dick, so dass bei dem Falzen des Falzflansch bereits eine genügende mechanische Festigkeit zwischen beiden Bauteilen erreichbar ist, wodurch auf ein Voraushärten und sogar auf Schweißpunkte verzichtet werden kann, da eine Relativbewegung zwischen den zu verbindenden Bauteilen durch die Dicke des Strukturklebstoffstreifens und daraus resultierender mechanischer Stabilität vermeidbar ist. Bei dem Falzvorgang wird zudem ein mechanisches Ausquetschen von Material aus dem Falzspalt heraus vermieden. Der Strukturklebstoffstreifen ist automatisch, beispielsweise mit einem Roboter applizierbar (Applikationskopf), wobei natürlich auch das Zusammenführen der beiden Beuteile aber auch der Falzprozess sowie das Lackieren und das anschließende Erwärmen automatisierbar ist. Beispielsweise aufgrund der automatischen Aplikationsmöglichkeit ist eine sichere und kontrollierte Befestigung bzw. Aufbringung des Strukturklebstoffstreifens möglich, was eine nachträgliche Überprüfung auf eine korrekte Bördelnaht, insbesondere unter zerstörenden Bedingungen hinfällig macht, da mit verifizierten Verfahrensparametern, stets dasselbe und den Anforderungen entsprechende Ergebnis erreichbar ist. Mit dem Verfahren kann auf den Einsatz von zusätzlichen Versiegelungsmaßnahmen, wie zum Beispiel das Auftragen eines kosmetischen Versiegelungselementes oder das Auftragen von Wasser abweisendem Wachs verzichtet werden. Vorteilhaft ist bei dem erfindungsgemäßen Verfahren insbesondere, dass die Lackschicht aufgebracht wird, bevor der Strukturklebstoff expandiert. So kann die Lackschicht von dem Strukturklebstoff zusammen mit den zu schützenden Elementen eingehüllt werden, was dem Korrosionsschutz besonders zugutekommt.

Weitere vorteilhafte Einzelheiten und Wirkungen der Erfindung sind im Folgenden anhand von in den Figuren dargestellten Ausführungsbeispielen näher erläutert. Es zeigen:
- Fig. 1a bis 1d: eine prinzipielle Schnittansicht mit einzelnen Schritten zum Herstellen einer Bördelnaht, und
- Fig. 2a bis 2c: eine beispielhafte Vorgehensweise zum Anbringen des Strukturklebstreifens an einem der Bauteile.

In den unterschiedlichen Figuren sind gleiche Teile stets mit denselben Bezugszeichen versehen, so dass diese in der Regel auch nur einmal beschreiben werden.

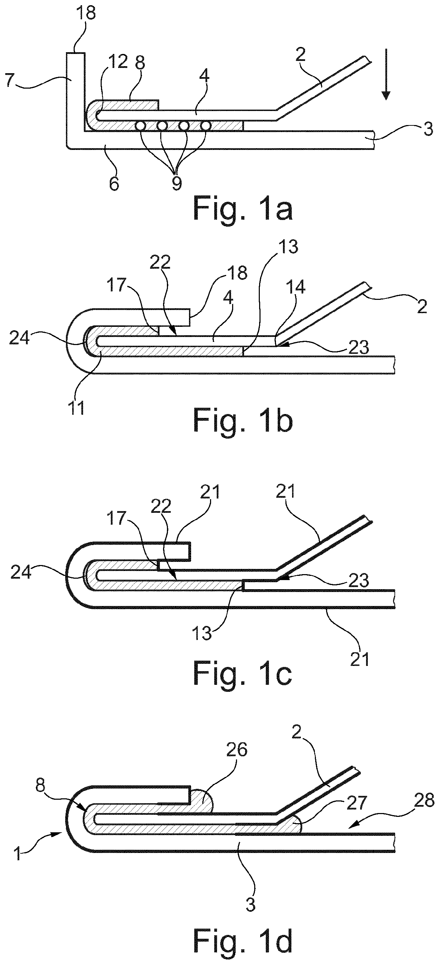

Die Figuren 1a bis 1d zeigen ein Verfahren zur Herstellen einer Bördelnaht 1 zwischen einem inneren Bauteil 2 und einem äußeren Bauteil 3. Das innere Bauteil 2 ist beispielsweise ein Türinnenblech eines Kraftfahrzeuges und weist einen freien Kantenabschnitt 4 auf, welcher beispielhaft in einem Winkel zu dem inneren Bauteil 2 angeordnet ist. Das äußere Bauteil 3 ist beispielsweise ein Türaußenblech des Kraftfahrzeuges, und weist einen an einem Kantenabschnitt 6 angeordneten Falzflansch 7 auf.

Zunächst wird ein Strukturklebstoffstreifen 8 aufgebracht, welcher eine Klebeseite haben kann, welcher also einseitig klebend sein kann. Der Strukturklebstoffstreifen 8 kann auch aufgespritzt werden. Der Strukturklebstoffstreifen 8 wird mit einer solchen Erstreckung erzeugt, dass der Strukturklebstoffstreifen 8 kürzer ist als ein Falzspalt 11 (Figur 1 b). Der Strukturklebstoffstreifen 8 weist also eine Breite auf, die kürzer, also schmaler ist als die Erstreckung des gesamten Falzspaltes 11. Der Strukturklebstoffstreifen 8 weist Abstandhalter 9 auf, welche in Figur 1a prinzipiell dargestellt sind. Auf die Abstandhalter 9 wird weiter unten noch eingegangen.

Der Strukturklebstoffstreifen 8 wird so aufgebracht, dass dieser eine Innenkante 12 des inneren Bauteils 2 so umfasst, dass der Strukturklebstoffstreifen 8 um das innere Bauteil 2 mit einer solchen Erstreckung um das innere Bauteil 2 herumgeführt ist, welche kürzer als der Falzspalt 11 ist. Anschließend wird der Falzflansch 7 in Richtung zum inneren Bauteil 2 gefalzt (Figur 1b). Dabei kann der Falzflansch 7 direkt vollständig umgefalzt werden, wobei aber auch ein Vorbördeln von z.B. 45° des Falzflansches 7 in Richtung zum inneren Bauteil 2 denkbar ist, und erst nach möglicher visueller Überprüfung das vollständige Umfalzen weitergeführt wird.

Die bisherigen Schritte wurden ohne Wärmeeinfluss durchgeführt, wobei in Figur 1 b erkennbar ist, dass der Strukturklebstoffstreifen 8 im kalten Zustand kürzer, also schmaler ist als der Falzspalt 11. Dabei ist der Strukturklebstoffstreifen 8 mit seiner inneren freien Kante 13 innerhalb des Falzspaltes 11 angeordnet und zu einem Übergang 14 des freien Kantenabschnittes 4 des inneren Bauteils 2, also zu dem Winkel zwischen beiden beabstandet. Die zur inneren Kante 13 gegenüberliegende äußere freie Kante 17 des Strukturklebstoffstreifens 8 ist ebenfalls innerhalb des Falzspaltes 11, jedoch zur freien Kante 18 des Falzflansch 7 beabstandet. So ist jeweils ein Ausdehnungsraum 22 und 23 gebildet.

Wird der Strukturklebstoffstreifen 8 unter Wärmeeinfluss aufgebracht, ohne dass der Strukturklebstoffstreifen 8 expandiert, wird dieser zunächst abgekühlt, bevor der Falzflansch 7 umgefalzt wird.

Ist der Falzflansch 7 gefalzt, also ist der Zustand nach Figur 1b erreicht, wird eine Lackschicht 21 aufgetragen (Figur 1c). Die Lackschicht 21 wird bevorzugt so aufgebracht, dass nicht nur der Bereich der Bördelnaht 1, sondern auch angrenzende Bereiche der beiden Bauteile 2 und 3 mit der Lackschicht 21 versehen sind. Bevorzugt sind die beiden Bauteile 2 und 3 vollständig mit der Lackschicht 21 versehen, was sinnvoll ist, wenn diese als Korrosionsschutzgrundierung ausgeführt ist.

Wie in Figur 1c erkennbar, wird die Lackschicht 21 ebenfalls in den Ausdehnungsräumen 22 und 23 des Falzspaltes 11 aufgetragen, und legt sich auch auf die Kanten 13 und 17 des Strukturklebstoffstreifens 8. So ist der Strukturklebstoffstreifen 8 quasi von der Lackschicht 21 eingehaust.

Ist die Lackschicht 21 aufgebracht, wird zumindest der Bördelnahtbereich einer Wärmebehandlung unterzogen, also erwärmt. Dabei kann eine in einem Elektroofen durchzuführende Wärmebehandlung bei beispielsweise 175°C z.B. 10 Minuten lang ausreichend sein, so dass der Strukturklebstoffstreifen 8 in den jeweiligen Ausdehnungsraum 22 und 23, aus dem Falzspalt 11 heraus, aber auch in alle anderen Richtungen expandieren kann. In Figur 1c beispielsweise, ist ein Luftspalt 24 erkennbar, welcher nach der Wärmebehandlung (Figur 1d) ausgefüllt ist. Die genannten Werte sind natürlich nur beispielhaft und keinesfalls beschränkend genannt.

Den Zustand nach der Wärmebehandlung zeigt Figur 1d. Die Figur 1d zeigt, dass der Strukturklebstoffstreifen 8 unter anderem aus dem Falzspalt 11 herausgetreten ist und jeweils eine Dichtwulst 26, 27 gebildet ist, die sich zum einen um die gesamte freie Kante 18 des Falzflansch 7, und zum anderen den Übergang 14 des freien Kantenabschnittes 4 des inneren Bauteils 2 überbrückend in den Zwischenraum 28 zwischen dem inneren Bauteil 2 und dem äußeren Bauteil 3 beide abdichtend einlegt. Insofern ist nach der Erwärmung eine Füllrate von zumindest 100/100/>0 insbesondere auch kritischer Bereiche wie zum Beispiel von Ecken, Rundungen sowie auch von Designlinien erreichbar. Da der Strukturklebstoffstreifen 8 den Falzspalt 11 zunächst nicht vollständig ausfüllt, jedoch mit seinen freien Kanten 13 und 17 lediglich gering beabstandet zu den betreffenden Elementen 14 und 18 angeordnet ist, ist in den Figuren nach der Expansion sogar eine Füllrate von 100/100/100 erkennbar.

Erkennbar ist in Figur 1d aber auch, dass die jeweilige Dichtwulst 26, 27 auch die Lackschicht 21 in den betreffenden Bereichen einhüllt.

Indem auch die Lackschicht 21 von dem expandierten Strukturklebstoffstreifen 8 umgeben ist, ist eine besonders zielführende Abdichtung gegen eindringende Feuchtigkeit gewährleistet.

Der Strukturklebstoffstreifen 8 kann beispielsweise ein einseitig klebendes Schmelzdichtband aus einem Acrylat-Epoxy-Hybridklebstoff sein, oder als solcher aufgespritzt werden.

Alle Schritte können automatisiert, beispielsweise mittels eines Roboters durchgeführt werden. In bevorzugter Ausführung werden Streifen jeweils anpassbarer Länge des Strukturklebstoffstreifens 8 abgelängt, und an einem der beiden Bauteile 2 oder wie oben beschrieben aufgelegt. Zielführend dabei ist, dass der Strukturklebstoffstreifen 8 im kalten Zustand die jeweils an den zu erwarten Falzspalt 11 angepasste Breite aufweist, so dass jeweils der Ausdehnungsraum 22 und 23 gebildet ist, wobei der Strukturklebstoffstreifen eine Dicke von 0,3 bis 1 mm aufweisen kann.

Wie oben bereits erwähnt, kann der Klebstoffstreifen feinverteilte Abstandhalter 9, insbesondere in der Ausgestaltung als Glaskügelchen aufweisen. Die Abstandhalter 9 können einen definierten Abstand der beiden Karosserieteile 2,3 definieren, so dass beide Bauteile 2,3, insbesondere nach dem Umfalzen einen homogenen Abstand zumindest im Bereich des Falzspaltes 11 aufweisen. Ein homogener Abstand zwischen beiden Bauteilen 2,3 kann dahingehend als vorteilhaft angesehen werden, dass der Falzspalt 11 ebenso homogen ausgefüllt werden kann. Insofern kann zweckmäßiger Weise vorgesehen werden, dass die Abstandhalter 9 Dimensionen, also Abmessungen im Bereich der Falzspaltweite aufweisen. Die Abstandhalter 9 können unterschiedliche geometrische Ausgestaltungen aufweisen, wobei die Abstandhalter 9 in einem Klebstoffstreifen bevorzugt die gleiche geometrische Ausgestaltung aufweisen sollten. Solche Abstandhalter 9 können beispielhaft als Tetraeder, als Kugel, als Würfel, oder als Oktaeder ausgeführt sein, um nur einige nicht beschränkende Ausgestaltungen zu nennen. Die Dimensionen der Abstandhalter 9 sind natürlich variabel, aber vorzugsweise unmittelbar abhängig von der herzustellen Bördelnaht 1. Insbesondere können die Abstandhalter 9 ein Minimalvolumen gewährleisten, um eine kontrollierte Expansion des Klebstoffstreifens 8 erreichen zu können. Auch der Werkstoff der Abstandhalter 9 ist natürlich nicht auf den Werkstoff Glas beschränkt. Beispielhaft können die Abstandhalter 9 auch aus einer Keramik oder aus mineralischen Rohstoffen bestehen. Die geometrischen Abstandhalter 9 dienen so auch zur Gewährleistung von gleichmäßigen Flanschgeometrien nach dem Bördelvorgang.

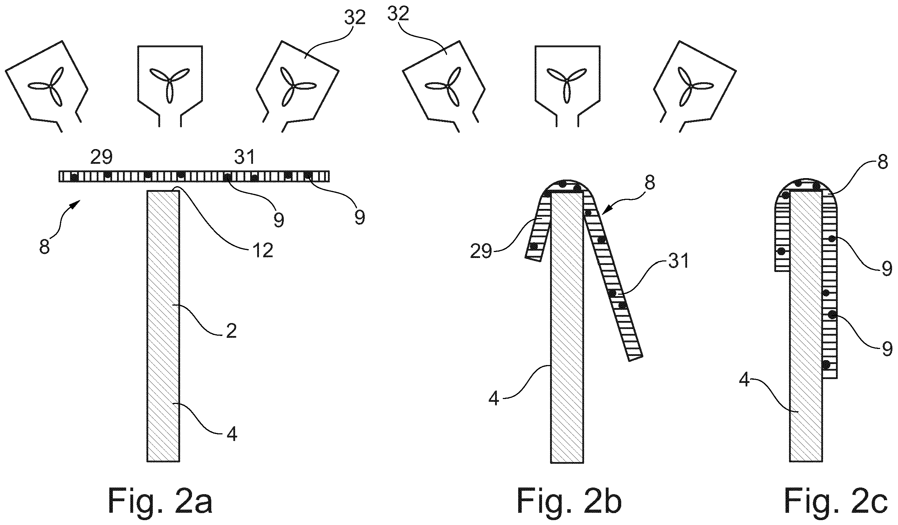

In den Figuren 2a bis 2c ist eine mögliche Vorgehensweise dargestellt, wie der Strukturklebstoffstreifen um den freien Kantenabschnitt 4 des inneren Bauteils 2 gelegt wird. Der Strukturklebstoffstreifen 8 ist beispielhaft als einseitig klebendes Schmelzdichtband ausgeführt.

Der Strukturklebstoffstreifen 8 wird mit seiner Klebeseite auf die freie Kante 12 des freien Kantenabschnittes 4 gelegt, wobei der Strukturklebstoffstreifen 8 mit seinen überstehenden Schenkeln 29 und 31, also mit seinem Überstand 29 und mit seinem Befestigungsabschnitt 31 in Richtung zum freien Kantenabschnitt 4 verformt wird, so dass ein den freien Kantenabschnitt bereichsweise umgebender Strukturklebstoffstreifen 8 an dem freien Kantenabschnitt 4 haftet. Zum Umformen des Strukturklebstoffstreifens 8 in Richtung zum freien Kantenabschnitt 4 können beispielhaft Heißluftdüsen 32 vorgesehen werden. Die Heißluft erwärmt den Strukturklebstreifen 8 mit einer solch geringen Temperatur, dass ein Umformen möglich ist, wobei eine Expansion aber ausgeschlossen ist. Ist der Strukturklebstoffstreifen 8 um den freien Kantenabschnitt 4 gelegt (Figur 2c), wird der Strukturklebstoffstreifen 8 abgekühlt, wobei ein Abkühlen auf Raumtemperatur ausreichend ist. Die Abstandhalter 9 sind in dem Strukturklebstoffstreifen 8 erkennbar, welche durchaus unterschiedliche Dimensionen haben können, wie in Figur 2 a bis Figur 2c erkennbar ist.

### Bezugszeichenliste:

- 1: Bördelnaht
- 2: Inneres Bauteil
- 3: Äußeres Bauteil
- 4: Freier Kantenabschnitt von 2
- 6: Kantenabschnitt von 3
- 7: Falzflansch
- 8: Strukturklebstoffstreifen
- 9: Abstandhalter
- 11: Falzspalt
- 12: Innenkante von 4
- 13: Innere freie kante von 8
- 14: Übergang
- 17: Äußere freie Kante von 8
- 18: Freie Kante von 7
- 21: Lackschicht
- 22: Ausdehnungsraum
- 23: Ausdehnungsraum
- 24: Luftspalt
- 26: Dichtwulst
- 27: Dichtwulst
- 28: Zwischenraum
- 29: Überstand
- 31: Befestigungsabschnitt
- 32: Heißluftdüsen

## Patentansprüche

1. Verfahren zum Herstellen einer Bördelnaht (1) zwischen einem inneren Bauteil (2), das einen freien Kantenabschnitt (4) hat und einem äußeren Bauteil (3), das einen an einem Kantenabschnitt (6) angeordneten Falzflansch (7) aufweist mit zumindest den folgenden Schritten:
Aufbringen eines unter Wärme expandierenden Strukturklebers in Form eines Klebstoffstreifens (8) auf eines der Bauteile (2,3) an seiner zum anderen Bauteil (2,3) orientierten Seite, sodann
Umfalzen des Falzflanschs (7) in Richtung zum inneren Bauteil (2), wodurch ein Falzspalt (11) entsteht, erst dann
Auftragung einer Lackschicht (21), zumindest im Bereich der Bördelnaht (1), auf eines oder beide der Bauteile (2, 3), und erst dann
Erwärmen zumindest des Bereichs der Bördelnaht (1), so dass der Strukturkleber des Klebstoffstreifens (8) schmilzt und expandiert, sich dabei ausdehnt und dadurch die Lackschicht (21) im Bereich der Bördelnaht (1) zumindest teilweise überdeckt.

2. Verfahren nach Anspruch 1,
**dadurch gekennzeichnet, dass**
der Klebstoffstreifen (8) zumindest abschnittsweise eine an einen späteren Falzspalt (11) angepasste Erstreckung aufweist, die zumindest an einem Ende des Falzspaltes (11) kürzer ist als die Erstreckung des Falzspaltes (11).

3. Verfahren nach Anspruch 1 oder 2,
**dadurch gekennzeichnet, dass**
der Klebstoffstreifen (8) ein vorgefertigtes Klebstoffelement ist.

4. Verfahren nach Anspruch 1 oder 2,
**dadurch gekennzeichnet, dass**
der Klebstoffstreifen (8) aus einem pastösen Strukturkleber besteht und auf zumindest ein Bauteil (2,3) aufgespritzt wird.

5. Verfahren nach einem der vorhergehenden Ansprüche,
**dadurch gekennzeichnet, dass**
sich am Ende des Falzspalts (11) sich eine Dichtwulst (26,27) aus dem expandierenden Strukturkleber bildet.

6. Verfahren nach Anspruche 5,
**dadurch gekennzeichnet, dass**
sich die Dichtwulst (27) den Übergang (14) des freien Kantenabschnittes (4) des inneren Bauteils (2) überbrückend in den Zwischenraum (28) zwischen dem inneren Bauteil (2) und dem äußeren Bauteil (3) einlegt.

7. Verfahren nach einem der vorhergehenden Ansprüche,
**dadurch gekennzeichnet, dass**
der Klebstoffstreifen (8) beim Aufbringen auf ein Bauteil (2,3) leicht erwärmt wird ohne zu expandieren.

8. Verfahren nach Anspruch 7,
**dadurch gekennzeichnet, dass**
der Klebstoffstreifen (8) nach dem Aufbringen abkühlt bevor der Falzflansch (7) umgefalzt wird.

9. Verfahren nach einem der vorhergehenden Ansprüche,
**dadurch gekennzeichnet, dass**
der Klebstoffstreifen (8) nach dem Aufbringen auf dem Bauteil (2,3) zumindest teilweise verhärtet bevor der Falzflansch (7) umgefalzt wird.

10. Verfahren nach einem der vorhergehenden Ansprüche,
**dadurch gekennzeichnet, dass**
der Klebstoffstreifen (8) feinverteilte Abstandshalter (9), insbesondere ausgebildet als Glaskügelchen, aufweist.

11. Verfahren nach Anspruch 10,
**dadurch gekennzeichnet, dass**
die Abstandshalter (9) Abmessungen im Bereich der Falzspaltweite aufweisen.

12. Verfahren nach einem der vorhergehenden Ansprüche,
**dadurch gekennzeichnet, dass**
die Lackschicht (21) eine Korrosionsschutzgrundierung ist.

## Claims

1. Method for producing a double-flanged seam (1) between an inner component (2) having a free edge section (4) and an outer component (3) having a fold flange (7) arranged on an edge section (6), comprising at least the following steps:
applying a structural adhesive, which expands under heat, in the form of an adhesive strip (8) to one of the components (2, 3) on the side thereof oriented toward the other component (2, 3), then
crimping over the fold flange (7) toward the inner component (2), thus creating a fold gap (11), only then
applying a paint coating (21), at least in the region of the double-flanged seam (1) to one or both of the components (2, 3), and only then
heating up at least the region of the double-flanged seam (1), thus melting and expanding the structural adhesive of the adhesive strip (8), which stretches in the process and thereby at least partially covers the paint coating (21) in the region of the double-flanged seam (1).

2. Method according to Claim 1,
**characterized in that**
the adhesive strip (8) has, at least in sections, an extension which is adapted to a subsequent fold gap (11) and which, at least at one end of the fold gap (11), is shorter than the extension of the fold gap (11).

3. Method according to Claim 1 or 2,
**characterized in that**
the adhesive strip (8) is a prefabricated adhesive element.

4. Method according to Claim 1 or 2,
**characterized in that**
the adhesive strip (8) consists of a pasty structural adhesive and is sprayed onto at least one component (2, 3).

5. Method according to one of the preceding claims, **characterized in that**
a sealing bead (26, 27) is formed from the expanding structural adhesive at the end of the fold gap (11).

6. Method according to Claim 5,
**characterized in that**
the sealing bead (27) settles into the intermediate space (28) between the inner component (2) and the outer component (3), thereby bridging the transition (14) of the free edge section (4) of the inner component (2).

7. Method according to one of the preceding claims, **characterized in that**
the adhesive strip (8) slightly heats up without expanding during application to a component (2, 3).

8. Method according to Claim 7,
**characterized in that**
the adhesive strip (8) cools down after application before crimping over the fold flange (7).

9. Method according to one of the preceding claims, **characterized in that**
the adhesive strip (8) at least partially cures after having been applied to the component (2, 3) and before crimping over the fold flange (7).

10. Method according to one of the preceding claims, **characterized in that**
the adhesive strip (8) comprises finely dispersed spacers (9), particularly in the form of glass beads.

11. Method according to Claim 10,
**characterized in that**
the spacers (9) have dimensions within the range of the width of the fold gap.

12. Method according to one of the preceding claims, **characterized in that**
the paint coating (21) is a corrosion protection primer.

## Revendications

1. Procédé de fabrication d'un joint à bords sertis (1) entre un composant interne (2) qui présente une portion d'arête libre (4) et un composant externe (3) qui présente une bride repliable (7) disposée au niveau d'une portion d'arête (6), comprenant au moins les étapes suivantes :
application d'un adhésif structurel se dilatant sous l'effet de la chaleur sous la forme d'un ruban adhésif (8) sur l'un des composants (2, 3) au niveau de son côté orienté vers l'autre composant (2, 3), puis
repliage de la bride repliable (7) dans la direction du composant interne (2) de telle sorte qu'il se produise une fente de repliage (11), et seulement ensuite
application d'une couche de vernis (21), au moins dans la région du joint à bords sertis (1), sur l'un ou les deux des composants (2, 3), et seulement ensuite
chauffage d'au moins la région du joint à bords sertis (1) de telle sorte que l'adhésif structurel du ruban adhésif (8) fonde et se dilate, en s'étirant et en recouvrant ainsi au moins en partie la couche de vernis (21) dans la région du joint à bords sertis (1).

2. Procédé selon la revendication 1,
**caractérisé en ce que**
le ruban adhésif (8) présente au moins en partie une étendue adaptée à une fente de repliage ultérieure (11), qui, au moins au niveau d'une extrémité de la fente de repliage (11), est plus courte que l'étendue de la fente de repliage (11).

3. Procédé selon la revendication 1 ou 2,
**caractérisé en ce que**
le ruban adhésif (8) est un élément adhésif préfabriqué.

4. Procédé selon la revendication 1 ou 2,
**caractérisé en ce que**
le ruban adhésif (8) se compose d'un adhésif structurel pâteux et est pulvérisé sur au moins un composant (2, 3).

5. Procédé selon l'une quelconque des revendications précédentes,
**caractérisé en ce que**
un bourrelet d'étanchéité (26, 27) constitué de l'adhésif structurel dilaté se forme à l'extrémité de la fente de repliage (11).

6. Procédé selon la revendication 5,
**caractérisé en ce que**
le bourrelet d'étanchéité (27) s'insère dans l'espace intermédiaire (28) entre le composant interne (2) et le composant externe (3) en surmontant la transition (14) de la portion d'arête libre (4) du composant interne (2).

7. Procédé selon l'une quelconque des revendications précédentes,
**caractérisé en ce que**
le ruban adhésif (8), lors de son application sur un composant (2, 3), s'échauffe légèrement sans se dilater.

8. Procédé selon la revendication 7,
**caractérisé en ce que**
le ruban adhésif (8), après l'application, se refroidit avant que la bride repliable (7) soit repliée.

9. Procédé selon l'une quelconque des revendications précédentes,
**caractérisé en ce que**
le ruban adhésif (8), après l'application sur le composant (2, 3), durcit au moins en partie avant que la bride repliable (7) soit repliée.

10. Procédé selon l'une quelconque des revendications précédentes,
**caractérisé en ce que**
le ruban adhésif (8) présente des éléments d'espacement finement répartis (9), en particulier réalisés sous forme de petites billes de verre.

11. Procédé selon la revendication 10,
**caractérisé en ce que**
les éléments d'espacement (9) présentent des dimensions dans la plage de la largeur de la fente de repliage.

12. Procédé selon l'une quelconque des revendications précédentes,
**caractérisé en ce que**
la couche de vernis (21) est un apprêt de protection anticorrosion.
